# EUROPEAN PATENT APPLICATION

(11) **EP 4 741 187 A1**
(43) Date of publication of application: **13.05.2026**
(21) Application number: 25214608.9
(22) Date of filing: 10.11.2025
(51) Int. Cl.: B60H 1/00

(54) **METHOD AND APPARATUS FOR OPERATING A VIRTUAL HVAC MODEL IMPLEMENTED AS A DIGITAL TWIN**

(30) Priority: 11.11.2024 KR 20240159316
(71) Applicant: SK Innovation Co., Ltd., Seoul 03188 (KR); SK On Co., Ltd., Seoul 03161 (KR)
(72) Inventor: NOH, Ji Seong, 34124 Daejeon (KR); LEE, Su Jin, 34124 Daejeon (KR)
(74) Representative: Prüfer & Partner mbB Patentanwälte · Rechtsanwälte

(57) **Abstract**

Method and an apparatus (100) for processing an operation of a virtual HVAC model (121) implemented as a digital twin, for performing temperature control of a cabin of a vehicle, wherein a refrigerant is included in the virtual HVAC model (121), and the refrigerant is configured to comprise at least one of a natural refrigerant, a hydrofluorocarbon (HFC)-based refrigerant, a hydrofluoroolefin (HFO)-based refrigerant, a hydrochlorofluorocarbon (HCFC)-based refrigerant, a hydrocarbon-based refrigerant that is not a natural refrigerant, and a halon or a perfluorocarbon (PFC)-based refrigerant.

## Description

### BACKGROUND

### Technical Field

The present disclosure relates generally to digital twin-based system control technology, and more particularly, to a method and apparatus for operating a virtual HVAC model implemented as a digital twin.

### Technical Considerations

An automotive heating, ventilation, and air conditioning (HVAC) system is generally configured to heat and cool the air within a passenger cabin to ensure occupant comfort. Such systems may be configured to selectively switch between air sources, such as fresh outside air and recirculated cabin air. Some systems draw in a mixture of this outside and inside air, condition it, and then supply the conditioned air into the cabin.

Conventionally, designing and testing the performance of these HVAC systems involves physical validation. For instance, engineers typically install a prototype HVAC system into an actual vehicle for laboratory testing, or they operate the system during real-world test drives to evaluate its function.

While these methods allow for the fine-tuning of heating and cooling components to maintain a desired temperature based on user settings, they have a significant drawback. Specifically, when attempting to optimize operations to reduce electricity consumption, these conventional testing processes fail to sufficiently reflect the diverse and dynamic driving environments actually encountered by an electric vehicle (EV). This inadequacy presents a challenge in designing truly energy-efficient HVAC systems for EVs.

### SUMMARY

Embodiments of the present disclosure provide a method and an apparatus for simulating control of an HVAC system of an electric vehicle to improve battery efficiency based on a digital twin.

Problems to be solved through various embodiments are not limited to the above-described problems, and other problems not described above will be clearly understood by those skilled in the art from the following description.

According to a general aspect of the present disclosure, there is provided a method for processing an operation of a virtual HVAC model implemented as a digital twin, wherein the operation is processed by a controller, the method comprising: setting, based on a user input, a destination in a navigation system of a vehicle and a target cabin environment for an HVAC system of the vehicle; acquiring, upon initiating a simulated drive of a virtual vehicle based on a driving route to the set destination, driving environment information for a position of the virtual vehicle at each preset time interval or each preset driving distance; implementing, via the virtual HVAC model configured as a digital twin of the HVAC system of the vehicle, a virtual cabin environment of the virtual vehicle, based on the acquired driving environment information; controlling a virtual HVAC system, included in the virtual HVAC model, to cause the virtual cabin environment to reach the target cabin environment; and determining, based on log data from the virtual HVAC system related to the controlling, an operation for the HVAC system of the vehicle that minimizes battery consumption of the vehicle. The virtual HVAC model is adapted to include a refrigerant that is configured to include at least one selected from the group consisting of: a natural refrigerant; a hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant.

In some embodiments, the natural refrigerant may include at least one selected from the group consisting of: methane (R-50), ammonia (R-717), carbon dioxide (R-744), ethane (R-170), and propane (R-290). The hydrofluorocarbon (HFC)-based refrigerant may include at least one selected from the group consisting of: difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc). The hydrofluoroolefin (HFO)-based refrigerant may include at least one selected from the group consisting of: 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye). The hydrochlorofluorocarbon (HCFC)-based refrigerant may include at least one selected from the group consisting of: chlorodifluoromethane (R-22), chlorotetrafluoroethane (R-124), and 1-chloro-1,1-difluoroethane (R-142b). The hydrocarbon-based refrigerant that is not a natural refrigerant may include at least one selected from the group consisting of: propylene (R-1270), isobutane (R-600a), dimethyl ether, isopentane, and pentane. The halon or the perfluorocarbon (PFC)-based refrigerant may include at least one selected from the group consisting of: trifluoroiodomethane (R-1311), octafluoropropane (R-218), and octafluorocyclobutane (RC318).

In some embodiments, the processor may be adapted to acquire the user input that sets the target cabin environment for the cabin through the HVAC system of the vehicle. Preferably, the processor is adapted to acquire the user input that sets a target temperature and/or humidity through a control panel of the HVAC system located in the cabin of the vehicle.

In some embodiments, the acquiring of the driving environment information for the position of the virtual vehicle at each preset time interval or each preset driving distance may be performed through a preset server that is configured to include at least one of a server that provides information related to an atmosphere and/or a ground for a specific location or area, preferably a weather station, a weather providing API, and/or a global weather data providing service.

In some embodiments, the controlling of the virtual HVAC system may be performed based on information or data stored in a memory.

In some embodiments, at least one program for controlling the operation of the virtual HVAC model and/or the navigation system may be stored in the memory.

In some embodiments, the log data for the operation of the virtual HVAC system may include at least some information on: a temperature change of the refrigerant; a rotational speed of a blower; a temperature and humidity of air flowing into the cabin; and a change in air volume and direction. Preferably, the log data further include at least one of: environmental data related to weather, atmospheric temperature, humidity, and ground temperature for a specific location of the virtual vehicle on the driving route, acquired during operation of the virtual HVAC system.

In some embodiments, the virtual HVAC model may be trained using artificial intelligence to predict and implement the virtual cabin environment of the virtual vehicle based on the driving environment information.

In some embodiments, the step of acquiring the driving environment information may further include: controlling a speed of the virtual vehicle such that a position of the virtual vehicle is ahead of a position of the vehicle by a preset time or a preset distance.

According to another aspect of the present disclosure, there is provided an apparatus for processing an operation of a virtual HVAC model implemented as a digital twin, the apparatus including: an HVAC system configured to perform heating control of a cabin of a vehicle; a refrigerant adapted to circulate through the HVAC system; and a virtual HVAC model configured to operate as a digital twin of the HVAC system, wherein the refrigerant includes at least one selected from the group consisting of: a natural refrigerant; a hydrofluorocarbon (HFC)-based refrigerant; a hydrofluoroolefin (HFO)-based refrigerant; a hydrochlorofluorocarbon (HCFC)-based refrigerant; a hydrocarbon-based refrigerant that is not a natural refrigerant; and a halon or a perfluorocarbon (PFC)-based refrigerant.

In some embodiments, the natural refrigerant may include at least one selected from the group consisting of: methane (R-50), ammonia (R-717), carbon dioxide (R-744), ethane (R-170), and propane (R-290).The hydrofluorocarbon (HFC)-based refrigerant may include at least one selected from the group consisting of: difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc). The hydrofluoroolefin (HFO)-based refrigerant may include at least one selected from the group consisting of: 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye). The hydrochlorofluorocarbon (HCFC)-based refrigerant may include at least one selected from the group consisting of: chlorodifluoromethane (R-22), chlorotetrafluoroethane (R-124), and 1-chloro-1,1-difluoroethane (R-142b). The hydrocarbon-based refrigerant that is not a natural refrigerant may include at least one selected from the group consisting of: propylene (R-1270), isobutane (R-600a), dimethyl ether, isopentane, and pentane. The halon or the perfluorocarbon (PFC)-based refrigerant may include at least one selected from the group consisting of: trifluoroiodomethane (R-1311), octafluoropropane (R-218), and octafluorocyclobutane (RC318).

In some embodiments, the apparatus may further include: a navigation system configured to guide a drive of the vehicle or a virtual vehicle implemented in the virtual HVAC model; and a processor configured to: set, based on a user input, a destination in the navigation system and a target cabin environment for an HVAC system of the vehicle; acquire, upon initiating a simulated drive of the virtual vehicle based on a driving route to the set destination, driving environment information for a position of the virtual vehicle at each preset time interval or each preset driving distance; implement, via the virtual HVAC model, a virtual cabin environment of the virtual vehicle, based on the acquired driving environment information; control a virtual HVAC system, included in the virtual HVAC model, to cause the virtual cabin environment to reach the target cabin environment; and determine, based on log data from the virtual HVAC system related to the controlling, an operation for the HVAC system of the vehicle that minimizes battery consumption of the vehicle.

In some embodiments, the virtual HVAC model may be trainable using artificial intelligence to predict and implement the virtual cabin environment of the virtual vehicle, based on the driving environment information.

In some embodiments, the processor may be further configured to: control a speed of the virtual vehicle such that a position of the virtual vehicle is ahead of a position of the vehicle by a preset time or a preset distance.

In a further aspect, there may be provided a use of a virtual HVAC model implemented as a digital twin for minimizing battery consumption of a vehicle.

In some non-limiting embodiments, a database for optimized HVAC system control that minimizes battery consumption during driving can be provided. This enables the effective control of battery consumption when a destination and target cabin environment are set via navigation in an actual vehicle.

In some non-limiting embodiments, the disclosed method and apparatus can minimize battery consumption while maintaining the vehicle's cabin environment in an optimal state, based on a predicted driving environment in which the actual vehicle is expected to operate.

In some non-limiting embodiments, the operation of the HVAC system can be periodically or in real-time adjusted in response to changes in the vehicle's external environment, thereby reducing battery consumption and improving energy efficiency.

In some non-limiting embodiments, the performance of the HVAC system can be verified in advance under various driving conditions. Consequently, the HVAC system can be optimized, and potential problems that may arise during its design and operation stages can be predicted and addressed proactively.

In some non-limiting embodiments, an optimal control method can be automatically determined by analyzing performance data, such as battery consumption, based on operation log data from the virtual HVAC system.

In some non-limiting embodiments, the energy efficiency of the HVAC system can be maximized, and passenger convenience can be improved simultaneously, without requiring separate manipulation by the user.

### BRIEF DESCRIPTION OF THE DRAWINGS

The above and other objects, features and other advantages of the embodiments of the present disclosure will be more clearly understood from the following detailed description taken in conjunction with the accompanying drawings, in which:
FIG. 1 is a block diagram schematically illustrating components of an apparatus for processing an operation of a virtual HVAC model implemented as a digital twin, according to some non-limiting embodiments of the present disclosure.
FIG. 2 is a diagram schematically illustrating a virtual HVAC system in which components of a vehicle HVAC system are implemented as a digital twin, according to some non-limiting embodiments of the present disclosure.
FIG. 3 is a diagram schematically illustrating a configuration of a cooling unit for vehicle air conditioning in a virtual HVAC system, according to some non-limiting embodiments of the present disclosure.
FIG. 4 is a diagram schematically illustrating a configuration of a heating unit for vehicle heating in a virtual HVAC system, according to some non-limiting embodiments of the present disclosure.
FIG. 5 is a flowchart illustrating a flow of operations for controlling an HVAC system of a virtual vehicle based on a virtual HVAC model, according to some non-limiting embodiments of the present disclosure.
FIG. 6 is a diagram illustrating an example of performing a simulated drive of a virtual vehicle via navigation, according to some non-limiting embodiments of the present disclosure.

### DETAILED DESCRIPTION

Hereinafter, embodiments of the present disclosure will be described in detail with reference to the accompanying drawings. However, since various changes may be made in the embodiments, the scope of the present disclosure is not limited or restricted by these embodiments. It should be understood that all modifications, equivalents, and alternatives for the embodiments are included in the scope of the present disclosure. For example, it is to be understood that the embodiments of the present disclosure include various alternative variations and step sequences, except where expressly specified to the contrary. It is also to be understood that the specific devices and processes illustrated in the attached drawings, and described in the following detailed description, are simply illustrative and describe non-limiting embodiments of the disclosed subject matter. Hence, specific dimensions and other physical characteristics related to the embodiments disclosed herein are not to be considered as limiting.

No aspect, component, element, structure, act, step, function, instruction, etc. used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, etc.) and may be used interchangeably with "one or more" or "at least one." Where only one item is intended, the term "one" or similar language is used. Also, as used herein, the terms "comprise", "comprises", "comprising", "include", "includes", "including", "has," "have," "having," etc. are intended to be open-ended terms. Further, the phrase "based on" is intended to mean "based at least partially on" unless explicitly stated otherwise. In addition, reference to an action being "based on" a condition may refer to the action being "in response to" the condition. For example, the phrases "based on" and "in response to" may, in some non-limiting embodiments, refer to a condition for automatically triggering an action (e.g., a specific operation of an electronic device, such as a computing device, a processor, etc.).

It will be understood that when a component is described to as being "connected," "combined" or "coupled" to another component, the component may be directly connected or coupled to the another component, or it may be "connected," "combined" or "coupled" to the other component by an intervening other component that may be present.

Further, in describing the components of the embodiment, the meaning of "or" may mean each of the components, may mean two or more of the components, or may mean all of the components. For example, it should be understood that the expressions "a, b or c" represent any one of "a," "b," "c," "a and b," "a and c," "b and c," and "a, b and c."

Components comprised in one embodiment and components comprising common functions will be described using the same names in other embodiments. The description given in one embodiment may be applied to other embodiments, and therefore will not be described in detail within the overlapping range, unless there is a description opposite thereto.

The device and/or 'data' processed by the device may be expressed in terms of 'information". Here, the information may be used as a concept comprising the data.

The present disclosure may describe a method and an apparatus for processing an operation of a virtual HVAC model implemented as a digital twin for a heating, ventilation, and air conditioning (HVAC) system of a vehicle.

According to various embodiments of the present disclosure, in a configuration for processing the operation of the virtual HVAC model, the term 'processing' may include the meaning of monitoring, simulating, or controlling the operation of the virtual HVAC model.

Here, the vehicle is a vehicle that drives its wheels using a motor, and may include an electric vehicle that drives its wheels based on electric power stored in a rechargeable battery, such as a lithium-ion battery.

According to an embodiment, an electric vehicle may include a vehicle that does not include an internal combustion engine. However, the present disclosure is not limited thereto, and a hybrid vehicle that drives its wheels with power from a motor and/or an internal combustion engine may also be included in the term electric vehicle.

An apparatus for processing an operation of a virtual HVAC model (hereinafter, 'the apparatus') may acquire driving environment information according to a drive (or a simulated drive) of a vehicle using a navigation system, and may monitor, simulate, or control the operation of the HVAC system using the acquired driving environment information and the virtual HVAC model.

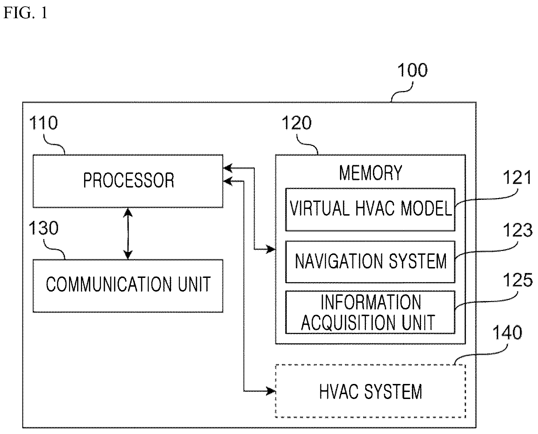

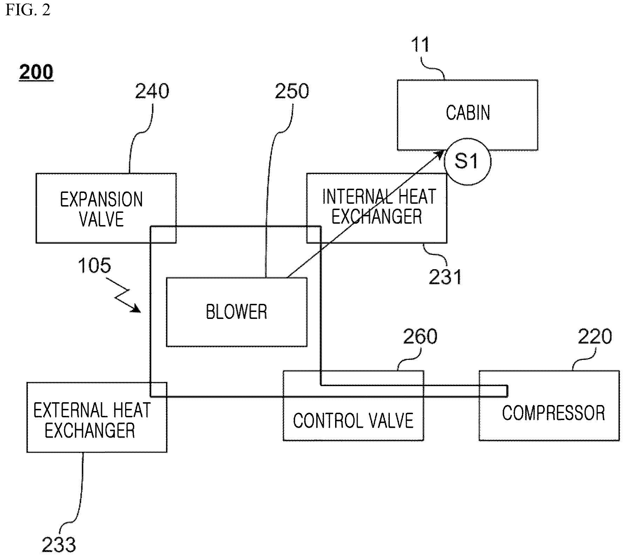

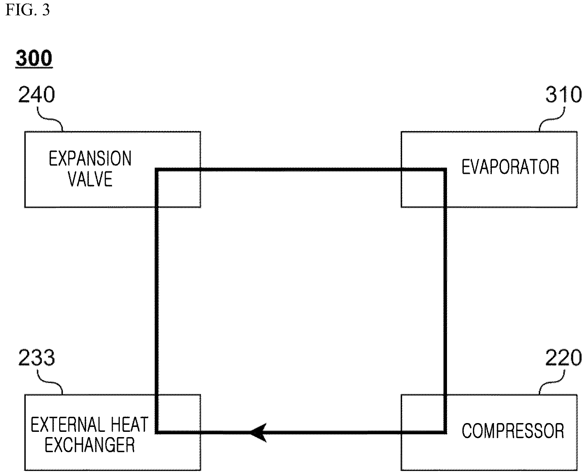

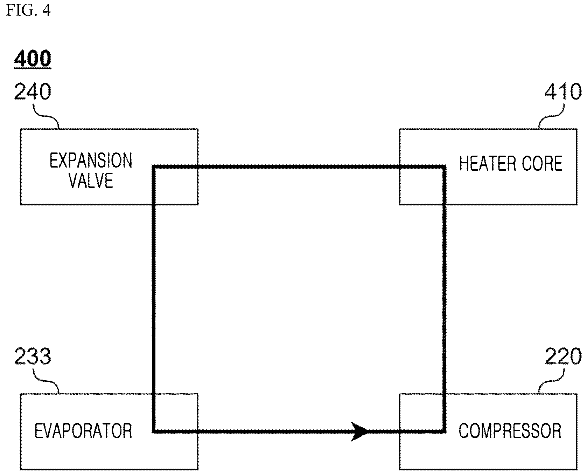

In this regard, FIG. 1 is a block diagram schematically illustrating components of an apparatus for processing an operation of a virtual HVAC model implemented as a digital twin, according to some non-limiting embodiments of the present disclosure. FIG. 2 is a diagram schematically illustrating a virtual HVAC system in which components of a vehicle HVAC system are implemented as a digital twin, according to some non-limiting embodiments of the present disclosure. FIG. 3 is a diagram schematically illustrating a configuration of a cooling unit for vehicle air conditioning in a virtual HVAC system, according to some non-limiting embodiments of the present disclosure. FIG. 4 is a diagram schematically illustrating a configuration of a heating unit for vehicle heating in a virtual HVAC system, according to some non-limiting embodiments of the present disclosure.

First, referring to FIG. 1, an apparatus 100 according to various embodiments of the present disclosure may be configured as an apparatus (or system) for processing (e.g., monitoring, simulating, or controlling) heating, ventilation, and air conditioning (HVAC) control related to the heating or cooling of a vehicle interior, based on a digital twin.

Referring to FIG. 1, the apparatus 100 may include a processor 110 configured to control the operation of components, a memory 120 configured to store a virtual HVAC model 121 configured as a digital twin of the vehicle's HVAC system and a navigation system 123, and a communication unit 130 for communication of the apparatus 100.

The processor 110 may be configured to include at least one processor and may process various data for the operation of the apparatus 100 through at least one program (e.g., application, tool, plug-in, software, etc.).

The processor 110 may control the operation or function of components (e.g., the memory 120, the communication unit 130, or the HVAC system 140, etc.) included in (or connected to) the apparatus 100, and to this end, may transmit and receive data with the components through the communication unit 130.

The memory 120 may be configured to include data for the operation of the processor 110. In addition, the memory 120 may be configured to include volatile memory, non-volatile memory, or a similar computer-readable recording medium.

In this case, the computer-readable recording medium may store a computer program for causing the apparatus 100 (or components of the apparatus 100) to perform operations based on various embodiments.

For example, the memory 120 may store various data that is transmitted, received, or processed by at least one component of the apparatus 100 (e.g., the processor 110 or the communication unit 130, etc.). The data may include, for example, a program for processing control commands, data processed through the program, or related input and output data.

According to an embodiment, the memory 120 may store at least one program for controlling the operation of the virtual HVAC model 121 and the navigation system 123.

The virtual HVAC model 121 stored in the memory 120 may be configured to include a virtual environment (e.g., a virtual HVAC system) configured as a digital twin of the actual HVAC system of the vehicle. For example, the virtual HVAC model 121 may be in a state where the shape, function, and operation of at least some components of the actual HVAC system of the vehicle are implemented to be identical or similar.

The virtual HVAC model 121 or the virtual HVAC system 200 may be configured based on at least some of various simulation software, such as Modelica, OpenFOAM, Ansys Fluent, Simulink, COMSOL Multiphysics, EnergyPlus, TwinCAT, TRNSYS, Unity, and NVIDIA PhysX.

Based on this, the virtual HVAC system 200 may be configured to be capable of reproducing, in a virtual environment, the process of providing temperature-controlled air (e.g., cool air, warm air, etc.) for cooling and/or heating from the HVAC system 140 of the vehicle to the cabin of the virtual vehicle (e.g., passenger compartment) and controlling the cabin temperature.

To explain in more detail, the virtual HVAC system 200 of the virtual HVAC model 121 may include at least one pipe 105 implemented to be identical or similar to the piping of the actual HVAC system, which is formed by the circulation of refrigerant through its components.

The at least one pipe 105 implemented in the virtual HVAC system 200 may be implemented in a state charged with at least one refrigerant, identically or similarly to how at least one refrigerant is charged in the actual piping of the actual HVAC system.

Here, the properties implemented for each of the at least one refrigerant may include properties related to at least some of: thermodynamic properties, fluid dynamic properties, phase change properties, physical and chemical properties, equation of state properties, and performance properties.

To explain in more detail, the thermodynamic properties may include pressure-temperature relationships, specific heat, and/or evaporation and condensation characteristics. The fluid dynamic properties may include viscosity and density, and/or flow rate. The phase change properties may include latent heat according to a phase change, and/or pressure and temperature changes according to a phase change. The physical and chemical properties may include chemical stability according to temperature, and/or environmental impacts (e.g., ozone depletion potential, global warming potential, etc.). The equation of state properties may include behavioral characteristics of the refrigerant based on an equation of state (EOS) that represents the state of the refrigerant (e.g., the relationship between pressure, volume, or temperature). The performance properties may include heat transfer efficiency in the process of the refrigerant absorbing and releasing heat.

Based on this, the refrigerant charged in the pipe 105 may be implemented to have the properties of at least one of various refrigerants, such as a natural refrigerant, a hydrofluorocarbon (HFC)-based refrigerant, a hydrofluoroolefin (HFO)-based refrigerant, a hydrochlorofluorocarbon (HCFC)-based refrigerant, a hydrocarbon-based refrigerant that is not a natural refrigerant, and a halon or a perfluorocarbon (PFC)-based refrigerant. These may be implemented alone or in a combination of two or more.

Here, the natural refrigerant may include methane (R-50), ammonia (R-717), carbon dioxide (R-744), ethane (R-170), propane (R-290), and other documented natural refrigerants.

The hydrofluorocarbon (HFC)-based refrigerant may include difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), 1,1,1,3,3-pentafluorobutane (R-365mfc), and other documented HFC-based refrigerants.

The hydrofluoroolefin (HFO)-based refrigerant may include 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), 1,2,3,3,3-pentafluoropropene (R-1225ye), and other documented HFO-based refrigerants.

The hydrochlorofluorocarbon (HCFC)-based refrigerant may include chlorodifluoromethane (R-22), chlorotetrafluoroethane (R-124), 1-chloro-1,1-difluoroethane (R-142b), and other documented HCFC-based refrigerants.

The hydrocarbon-based refrigerant that is not a natural refrigerant may include propylene (R-1270), isobutane (R-600a), dimethyl ether, isopentane, pentane, and other documented non-natural hydrocarbon-based refrigerants.

The halon or perfluorocarbon (PFC)-based refrigerant may include trifluoroiodomethane (R-13I1), octafluoropropane (R-218), octafluorocyclobutane (RC318), and other documented halon- or PFC-based refrigerants.

The components implemented in the virtual HVAC system 200 may include a compressor 220, an internal heat exchanger 231, an external heat exchanger 233, and an expansion valve 240, implemented to be identical or similar to the configuration of a compressor that compresses refrigerant, an internal heat exchanger, an external heat exchanger, and an expansion valve in an actual HVAC system.

Here, described with reference to FIGS. 3 and 4, the internal heat exchanger 231 may be implemented to be identical or similar to the configuration of an actual internal heat exchanger. To explain in more detail, the internal heat exchanger 231 may be implemented as an evaporator 310 for a cooling mode of the virtual HVAC system 200 and a heater core 410 for a heating mode.

Here, the evaporator 310 and the heater core 410, which constitute the internal heat exchanger 231, may be configured in parallel or in series with respect to the pipe 105.

In addition, the virtual HVAC system 200 may include a blower 250 for circulating air in the cabin 11, implemented to be identical or similar to a blower for circulating the cabin air of a vehicle in an actual HVAC system.

Here, the virtual vehicle may be a vehicle implemented in the virtual HVAC model 121 to be identical or similar to an actual vehicle. The cabin 11 may be a cabin of the virtual vehicle, implemented to be identical or similar to the cabin of an actual vehicle in which the actual HVAC system, which is the subject of the virtual HVAC system 200, is configured. The cabin 11 of the virtual vehicle may be included in the configuration of the virtual HVAC system 200.

To this end, the virtual HVAC system 200 may be in a state where at least a part of the cabin and the cabin environment of an actual vehicle in which an actual HVAC system is configured is implemented as a virtual vehicle and/or the cabin 11 of the virtual vehicle.

Here, the blower 250 may be positioned upstream or downstream of the internal heat exchanger 231 and configured to control the flow of air passing through the internal heat exchanger 231. Here, the blower 250 may be configured to include at least one fan.

In addition, in the virtual HVAC system 200, a passage (e.g., a duct) may be configured such that air that has passed through the internal heat exchanger 231 flows into the cabin 11.

In the virtual HVAC model 121, the operation of the virtual HVAC system 200 (or the cooling unit 300) for the cooling mode may be described in more detail with reference to FIG. 3.

Here, as described above, the virtual HVAC system 200 may be implemented to include a compressor 220, an external heat exchanger 233, and an expansion valve 240, and may be implemented to include an evaporator 310 as the internal heat exchanger 231.

Based on this, describing the cooling mode of the virtual HVAC system 200, the compressor 220 may be implemented to convert a low-temperature and low-pressure gaseous refrigerant into a high-temperature and high-pressure gaseous refrigerant by increasing its pressure (or compressing it), and to supply it to the external heat exchanger 233.

The external heat exchanger 233 may operate as a condenser in the cooling mode. The condenser may be implemented to convert the high-temperature and high-pressure gaseous refrigerant into a high-temperature and high-pressure liquid refrigerant through heat exchange, and to supply it to the expansion valve 240.

The expansion valve 240 may be implemented to convert the high-temperature and high-pressure liquid refrigerant into a low-temperature and low-pressure liquid refrigerant by lowering its pressure (or expanding it), and to supply it to the internal heat exchanger 231.

The evaporator 310 may be implemented such that the low-temperature and low-pressure liquid refrigerant absorbs heat from the cabin 11 of the virtual vehicle and evaporates into a low-temperature and low-pressure gaseous refrigerant.

For the operation of the internal heat exchanger 231 (evaporator 310), the virtual HVAC system 200 may be implemented to include at least one blower 250, and the blower 250 may be implemented to supply air from the cabin 11 of the virtual vehicle to the evaporator 310 and to supply the air that has passed through the evaporator 310 to the cabin 11 of the virtual vehicle to enhance the air cooling effect.

The low-temperature and low-pressure gaseous refrigerant may be supplied back to the compressor 220 to continuously perform the operation of the cooling mode.

On the other hand, in the virtual HVAC model 121, the operation of the virtual HVAC system 200 (or the heating unit 400) for the heating mode may be described in more detail with reference to FIG. 4.

Here, as described above, the virtual HVAC system 200 may be implemented to include a compressor 220, an external heat exchanger 233, and an expansion valve 240, and may be implemented to include a heater core 410 as the internal heat exchanger 231.

Based on this, describing the heating mode of the virtual HVAC system 200, the compressor 220 may be implemented to convert a low-temperature and low-pressure gaseous refrigerant into a high-temperature and high-pressure gaseous refrigerant by increasing its pressure (or compressing it), and to supply it to the heater core 410.

The heater core 410 may be implemented to release heat from the high-temperature and high-pressure gaseous refrigerant and condense it into a high-temperature and high-pressure liquid refrigerant.

For the operation of the internal heat exchanger 231 (heater core 410), the virtual HVAC system 200 includes at least one blower 250, and the blower 250 may be implemented to supply air from the cabin 11 of the virtual vehicle to the heater core 410 and to supply the air that has passed through the heater core 410 to the cabin 11 of the virtual vehicle to enhance the air heating effect.

The high-temperature and high-pressure liquid refrigerant that has passed through the internal heat exchanger 231 may be implemented to be supplied to the expansion valve 240.

The expansion valve 240 may be implemented to convert the high-temperature and high-pressure liquid refrigerant into a low-temperature and low-pressure liquid refrigerant by lowering its pressure (or expanding it), and to supply it to the external heat exchanger 233.

The external heat exchanger 233 may operate as an evaporator in the heating mode. The evaporator may be implemented to convert the low-temperature and low-pressure liquid refrigerant into a low-temperature and low-pressure gaseous refrigerant through heat exchange.

The low-temperature and low-pressure gaseous refrigerant may be supplied back to the compressor 220 to continuously perform the operation of the heating mode.

As described above, the external heat exchanger 233 may be implemented as the same device (e.g., a reversible heat exchanger, or a reversible heat pump heat exchanger, etc.) to perform the operation of a condenser in the cooling mode, or to perform the role of an evaporator in the heating mode.

However, the present disclosure is not limited thereto, and the virtual HVAC system 200 may be implemented to respectively include a condenser component as the external heat exchanger 233 for vehicle cooling, and an evaporator component as the external heat exchanger 233 for vehicle heating.

In addition, the virtual HVAC system 200 may be implemented to further include a control valve 260 that controls the flow of refrigerant to the pipe 105 to provide cooling or heating for the cabin 11.

Here, the control valve 260 may be implemented to include the function of a reversing valve that controls the flow direction of the refrigerant in the piping. The control valve 260 may control the direction in which the refrigerant flows in the piping.

For example, the processor 110 may control the control valve 260 to cause the refrigerant to flow in the direction of the external heat exchanger 233 with respect to the compressor 220 in the pipe 105, and accordingly, the virtual HVAC system 200 may operate in a cooling mode.

On the other hand, the processor 110 may control the control valve 260 to cause the refrigerant to flow in the direction of the internal heat exchanger 231 with respect to the compressor 220 in the pipe 105, and accordingly, the virtual HVAC system 200 may operate in a heating mode.

When a plurality of independent pipes 105 are implemented for the same path, the components of the virtual HVAC system 200, for example, the compressor 220, the internal heat exchanger 231, the external heat exchanger 233, the expansion valve 240, and the control valve 260, may be independently implemented in each pipe 105.

To explain in more detail, in the compressor 220, a compression cylinder may be independently connected to each of the plurality of pipes. In this case, the compressor 220 may be implemented to perform compression of the refrigerant for the corresponding pipe when it detects the flow of the refrigerant.

In addition, the control valve 260 may be independently connected to each of the plurality of pipes. The control valve 260 may control the flow of refrigerant for each of the plurality of pipes, and may also be implemented to control the direction in which the refrigerant flows for the operation of the heating mode or the cooling mode of the virtual HVAC system 200.

For example, for heating the cabin 11 of the virtual vehicle, the control valve 260 may control the refrigerant to move in the direction of the internal heat exchanger 231. On the other hand, for cooling the cabin 11 of the virtual vehicle, the control valve 260 may control the refrigerant to move in the direction of the external heat exchanger 233.

In addition, the virtual HVAC system 200 may be implemented with a condenser connected between the compressor 220 and the internal heat exchanger 231 (e.g., heater core 410) to perform a phase change of the refrigerant compressed by the compressor 220.

In addition, the virtual HVAC system 200 may be configured with at least one heat transfer unit (not shown) between the external heat exchanger 233 and the control valve 260.

Here, the heat transfer unit may be connected to the pipe 105 to transfer heat from at least one heat-generating part configured inside the vehicle to the refrigerant.

Here, the heat-generating part may be implemented to include at least one of a battery, wiring, a motor, and a transmission. The heat-generating part and the heat transfer unit may be implemented to be connected through at least some of a heat transfer medium such as a heat pipe, a thermally conductive polymer, a thermal pad, graphene, or a thermally conductive rubber.

In addition, the virtual HVAC system 200 may be implemented to include at least one temperature measurement sensor S1 at a preset position (e.g., a first position) inside the cabin 11 (passenger compartment) to measure the cabin temperature for the cabin 11.

Here, the first position may include at least one of a driver's seat area and a passenger's seat area in the cabin 11. The temperature measurement sensor S1 may be installed on at least a part of a seat, a vehicle frame, a dashboard, a floor, or a ceiling.

In addition, the virtual HVAC model 121 may be configured to predict and implement a virtual cabin environment for the cabin 11 of the virtual HVAC system 200, based on driving environment information acquired during a simulated drive of the navigation system 123.

Here, the driving environment information may include information about at least some driving environments, such as atmospheric temperature, ground temperature, weather, humidity, altitude, or slope angle, at the location of the simulated drive when the virtual vehicle of the virtual HVAC system 200 is performing a simulated drive on the navigation system 123 (or in conjunction with the navigation system 123).

In addition, the driving environment information may be configured to include information acquired for a set driving area centered on the location where the virtual vehicle is performing the simulated drive.

To explain in more detail, the driving environment information may include terrain information such as the altitude or slope angle of the location where the virtual vehicle is driving, or may include information such as the ground temperature at the location where the virtual vehicle is driving.

In this case, the driving environment information may be configured to be acquired by setting a driving area as a preset area in front of or behind the virtual vehicle based on the location of the simulated driving virtual vehicle, and acquiring driving environment information for the preset driving area.

Here, the preset area in front of or behind the virtual vehicle may be determined with respect to the road on which the virtual vehicle is located (or performing a simulated drive) on the navigation system 123.

Here, acquiring the driving environment information for the location where the virtual vehicle is performing a simulated drive may be acquiring actual environment information of an actual location corresponding to the location of the simulated drive of the virtual vehicle.

However, the present disclosure is not limited thereto, and the driving environment information may include information about at least some driving environments, such as atmospheric temperature, ground temperature, weather, humidity, altitude, or slope angle, at the location of the actual vehicle when the actual vehicle, which is the subject of the virtual vehicle, is driving.

In acquiring the driving environment information based on the simulated drive of the virtual vehicle, the information acquisition unit 125 may be configured to determine an actual location corresponding to the simulated drive location and acquire driving environment information for an area set around the corresponding actual location.

In addition, even when acquiring driving environment information for the drive of an actual vehicle, the information acquisition unit 125 may be configured to acquire driving environment information for an area set around the driving location of the actual vehicle.

In addition, the virtual cabin environment may be configured to include the temperature or humidity for the cabin 11 of the virtual vehicle. Also, when the virtual HVAC system 200 is in operation, the virtual cabin environment may be configured to include the direction or volume of air (e.g., cool air or warm air) supplied to the cabin 11 of the virtual vehicle.

Here, the virtual cabin environment for the cabin 11 may be implemented as an environment for the cabin 11 of the virtual vehicle that reflects the driving environment information acquired based on the simulated drive of the virtual vehicle (or the drive of the actual vehicle) as described above.

In a state where the virtual cabin environment for the cabin 11 of the virtual vehicle is implemented according to the driving environment information, the virtual HVAC model 121 may perform a cooling mode or a heating mode of the virtual HVAC system 200 based on an inputted target cabin environment.

For example, the virtual HVAC model 121 may control the temperature of the air flowing into the cabin 11 through the virtual HVAC system 200, such that the virtual cabin environment of the cabin 11 reaches the target cabin environment.

In addition, the virtual HVAC model 121 may control the temperature of the air flowing into the cabin 11 through the virtual HVAC system 200, such that the virtual cabin environment of the cabin 11 maintains the target cabin environment.

In addition, the virtual HVAC model 121 may be configured to store data (e.g., log data) processed based on the operation of the navigation system 123 and the virtual HVAC system 200 in the memory 120.

For example, the virtual HVAC model 121 may store, in the memory 120, log data for at least some of: driving environment information inputted to implement the virtual cabin environment for the cabin 11 of the virtual vehicle; the virtual cabin environment implemented based on the driving environment information; the inputted target cabin environment; and the operation of the virtual HVAC system 200 to satisfy the inputted target cabin environment.

Here, the log data for the operation of the virtual HVAC system 200 may include various operation information performed by the virtual HVAC system 200 to cause the virtual cabin environment of the cabin 11 to reach the target cabin environment.

For example, the log data for the operation of the virtual HVAC system 200 may include at least some information on: the temperature change of the refrigerant; the rotational speed of the blower 250; the temperature and humidity of the air flowing into the cabin 11; and the change in air volume and direction.

In addition, the log data for the operation of the virtual HVAC system 200 may also record, as log data, environmental data such as weather, atmospheric temperature, humidity, and ground temperature for a specific location of the virtual vehicle on the driving route, which is acquired while the virtual HVAC system 200 is operating.

The recorded log data may be utilized to analyze the correlation between the driving environment information and the virtual cabin environment. In addition, it may be used for future optimization of the operation of the virtual HVAC system. For example, the log data may be used to analyze the operating conditions required for the HVAC system to maintain the target cabin environment in a specific driving environment, and may be used to derive an optimized control method that can maintain a pleasant cabin environment while reducing energy consumption.

In addition, the virtual HVAC model 121 may be configured to calculate the power consumption for the operation of the virtual HVAC system 200 to cause the virtual cabin environment implemented for the cabin 11 to reach the target cabin environment or to maintain the virtual cabin environment of the cabin 11 during the operation of the virtual HVAC system 200.

Here, the virtual HVAC model 121 may be configured to calculate the power consumption for each case when the operating conditions of the virtual HVAC system 200 are changed.

Here, the change in operating conditions may include a change in the operating conditions for at least some of the compressor 220, the internal heat exchanger 231, the external heat exchanger 233, the expansion valve 240, and the control valve 260 configured in the virtual HVAC system 200, or a change in the temperature of the refrigerant charged in the piping.

In this case, the virtual HVAC model 121 may be configured to store the power consumption calculated according to the operating conditions of the virtual HVAC system 200 in the memory 120.

The memory 120 may be configured to store, as a database, information on: driving environment information acquired according to the operation of the virtual HVAC model 121; the virtual HVAC system 200 and/or the virtual cabin environment to which the driving environment information is applied; the target cabin environment; and the operation of the virtual HVAC system 200 controlled based thereon.

The navigation system 123 stored in the memory 120 may be configured to determine a current position and a driving route to a set destination for the virtual vehicle of the virtual HVAC model 121, and to perform a simulated drive along the driving route.

Here, when the apparatus 100 is configured as an actual vehicle or included in an actual vehicle, the navigation system 123 may identify the current position of the actual vehicle. In addition, the navigation system 123 may determine a driving route to a set destination, and according to a set state (or user input), may perform a simulated drive of the virtual vehicle or perform a navigation operation (e.g., route guidance) according to the drive of the actual vehicle.

The navigation system 123 may be configured to provide driving environment information for the position during the simulated drive of the virtual vehicle (or for a driving area set around the position), or to provide driving environment information for the position during the drive of the actual vehicle (or for a driving area set around the position).

The information acquisition unit 125 may be configured to acquire the driving environment information provided by the navigation system 123 for the current position of the virtual vehicle or the actual vehicle on the navigation system 123.

In addition, the information acquisition unit 125 may be configured to acquire information on the current position of the virtual vehicle or the actual vehicle from the navigation system 123, and to acquire driving environment information for the current position through a preset server (not shown).

Here, the information acquisition unit 125 may be configured to acquire information related to terrain, such as altitude or slope angle, from among the driving environment information through the navigation system 123, and to acquire information related to the atmosphere and/or the ground, such as atmospheric temperature, ground temperature, weather, or humidity, through the preset server.

Here, the preset server for acquiring the driving environment information may include at least one of various servers that provide information related to the atmosphere and/or the ground for a specific location (or area), such as a weather station (e.g., meteorological administration), a weather providing API, or a global weather data providing service.

In addition, the memory 120 may include an artificial intelligence algorithm based on at least some of: a neural network algorithm, a blockchain algorithm, a deep learning algorithm, a regression analysis algorithm, and related mechanisms, operators, language models, or big data for processing control commands.

As described above, when the virtual HVAC model 121 is configured to predict and implement the virtual cabin environment for the cabin 11 of the virtual HVAC system 200 based on the driving environment information, the virtual HVAC model 121 may be in a state of being trained based on an artificial intelligence algorithm.

To explain in more detail, the virtual HVAC model 121 may be trained using an Artificial Neural Network (ANN), Deep Learning, a Recurrent Neural Network (RNN), Reinforcement Learning, a Decision Tree, a Random Forest, a Support Vector Machine (SVM), or k-Nearest Neighbors (KNN), etc.

The virtual HVAC model 121 may be trained to predict the virtual cabin environment for the cabin 11 of the virtual vehicle (the virtual vehicle in which the virtual HVAC system 200 is configured), with the driving environment information as an input.

Here, the memory 120 may include a dataset for training the virtual HVAC model 121. For example, a dataset including driving environment information acquired based on the position of an actual vehicle and cabin environment information measured at that position may be stored in the memory 120.

Here, the driving environment information acquired for the actual vehicle and the measured cabin environment information may be driving environment information acquired for each of a plurality of various locations where an actual vehicle (or a plurality of other actual vehicles having the same specifications and performance as the actual vehicle) is located, and cabin environment information measured corresponding to each of the driving environment information.

Based on this, the virtual HVAC model 121 may be in a trained state to implement a virtual cabin environment that is identical or similar to the cabin environment corresponding to the driving environment information when the driving environment information is inputted based on the dataset.

In addition, the virtual HVAC model 121 may be in a trained state to predict the virtual cabin environment for the cabin 11 of the virtual HVAC system 200 when the driving environment information of the virtual vehicle is inputted.

The communication unit 130 may establish a wired or wireless communication channel between the internal components of the apparatus 100, and/or between the apparatus 100 and at least one other device (e.g., a user device or a server), and may support the performance of communication through the established communication channel.

When the apparatus 100 is configured as an actual vehicle or is included in an actual vehicle, the apparatus 100 may be configured to include the HVAC system 140 of the actual vehicle. However, the HVAC system 140 may be connected to the apparatus 100 externally.

Referring to FIG. 1, although the HVAC system 140 is shown as being directly connected to the processor 110, the present disclosure is not limited thereto, and it may be connected to the communication unit 130 to transmit and receive data with the processor 110.

According to the description above, the virtual HVAC system 200 configured in the virtual HVAC model 121 is modeled from the HVAC system 140 using digital twin technology. That is, the HVAC system 140 includes the components of the virtual HVAC system 200 and may be configured to have a structure, shape, and function that is identical or similar to that of the virtual HVAC system 200.

In exemplary embodiments, the refrigerant charged in the piping of the HVAC system 140 may include a natural refrigerant, a hydrofluorocarbon (HFC)-based refrigerant, a hydrofluoroolefin (HFO)-based refrigerant, a hydrochlorofluorocarbon (HCFC)-based refrigerant, a hydrocarbon-based refrigerant that is not a natural refrigerant, a halon or a perfluorocarbon (PFC)-based refrigerant, and other known refrigerants. These may be used alone or in a combination of two or more.

Here, the natural refrigerant may include methane (R-50), ammonia (R-717), carbon dioxide (R-744), ethane (R-170), propane (R-290), other documented natural refrigerants.

The hydrofluorocarbon (HFC)-based refrigerant may include difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1, 1, 1,2,3,3-hexafluoropropane (R-236ea), 1,1,1,3,3,3-hexafluoropropane (R-236fa), 1,1,1,3,3-pentafluoropropane (R-245fa), 1,1,1,3,3-pentafluorobutane (R-365mfc), and other documented HFC-based refrigerants.

The hydrofluoroolefin (HFO)-based refrigerant may include 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), 1,2,3,3,3-pentafluoropropene (R-1225ye), and other documented HFO-based refrigerants.

The hydrochlorofluorocarbon (HCFC)-based refrigerant may include chlorodifluoromethane (R-22), chlorotetrafluoroethane (R-124), 1-chloro-1,1-difluoroethane (R-142b), and other documented HCFC-based refrigerants.

The hydrocarbon-based refrigerant that is not a natural refrigerant may include propylene (R-1270), isobutane (R-600a), dimethyl ether, isopentane, pentane, and other documented hydrocarbon-based refrigerants.

The halon or perfluorocarbon (PFC)-based refrigerant may include trifluoroiodomethane (R-13I1), octafluoropropane (R-218), octafluorocyclobutane (RC318), and other documented halon or PFC-based refrigerants.

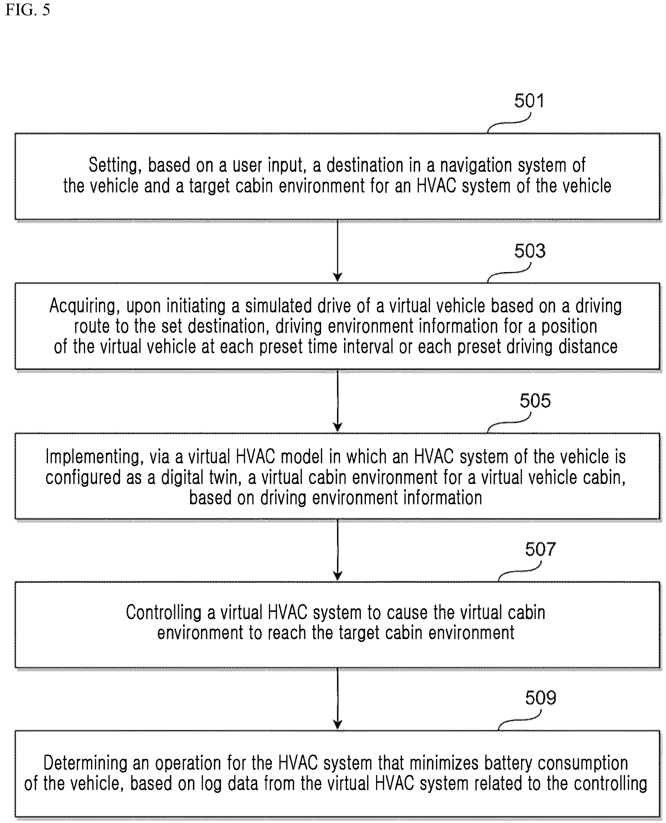

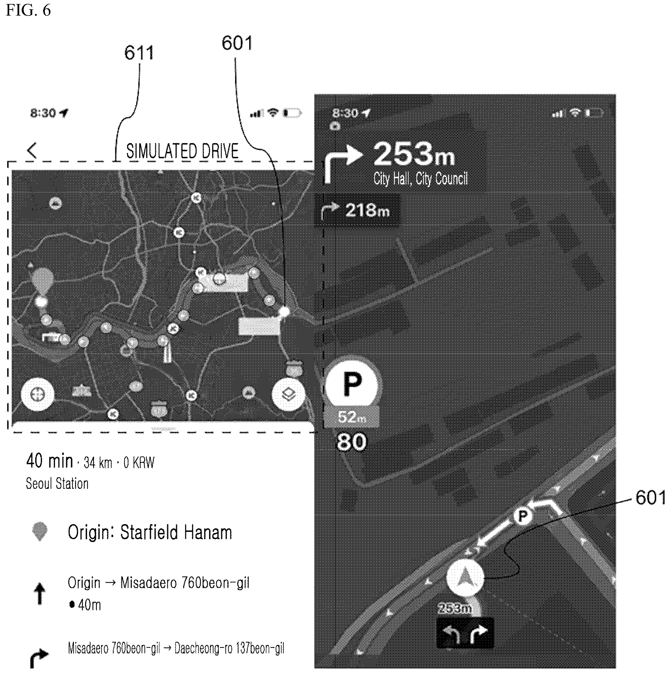

A method for processing an operation of a virtual HVAC model implemented as a digital twin may be described in detail through the apparatus 100 configured as described above, with reference to FIGS. 5 and 6.

FIG. 5 is a flowchart illustrating a flow of operations for controlling an HVAC system of a virtual vehicle based on a virtual HVAC model in an apparatus according to an embodiment of the present disclosure. FIG. 6 is a diagram illustrating an example of performing a simulated drive of a virtual vehicle via navigation in an apparatus according to an embodiment of the present disclosure.

First, the operation of processing the control of the virtual HVAC system and the HVAC system of the vehicle may be described with reference to FIG. 5.

In step 501, the processor 110 may set a destination in the vehicle's navigation system and a target cabin environment (or desired cabin environment) for the vehicle's HVAC system, according to a user input.

Here, the target cabin environment may be a desired cabin environment for the actual vehicle cabin (e.g., passenger compartment) by operating the actual HVAC system.

For example, the target cabin environment may include a target cabin temperature or humidity for the actual vehicle cabin, and may be further configured to include the direction or volume of air (e.g., cool air or warm air) supplied to the cabin of the actual vehicle.

The processor 110 may acquire a user input that sets the target cabin environment for the cabin through the actual HVAC system of the actual vehicle.

For example, the processor 110 may acquire a user input that sets a target temperature and/or humidity through a control panel (not shown) of the HVAC system located in the cabin of the actual vehicle.

The processor 110 may set the target cabin environment for the cabin 11 in the virtual HVAC system 200 of the virtual HVAC model 121, according to the acquired information on the target cabin environment.

In addition, the processor 110 may identify a user input that sets a destination and a route to the destination through the navigation system 123.

Here, although the operation of setting the destination and the driving route through the navigation system 123 is described after the operation of setting the target cabin environment of the actual HVAC system, the order of these operations may be changed.

Here, the operation of setting the target cabin environment according to the user input may include the operation of changing the target cabin environment while the HVAC system 140 is in operation.

In step 503, when a simulated drive of the virtual vehicle is initiated based on the driving route to the destination set in the navigation system, the processor 110 may acquire driving environment information for the position of the virtual vehicle at each preset time interval or each preset driving distance.

To explain in more detail with reference to FIG. 6, the processor 110 may initiate a simulated drive of the virtual vehicle according to the driving route set in the navigation system 123. In addition, the processor 110 may display the position 601 of the virtual vehicle performing the simulated drive on the screen of the navigation system 123.

In this case, the processor 110 may process the operation of performing the simulated drive of the virtual vehicle through the navigation system 123 as a separate operation from the operation of the navigation system 123 displaying the position of the actual vehicle during its drive.

At this time, the processor 110 may set the position of the simulated driving virtual vehicle to be ahead of the position of the actual vehicle by a preset time (e.g., 1 minute) or by a preset distance (e.g., 500 m). The preset time and the preset distance may be in preferred ranges of 10 seconds to 5 minutes and 50 m to 5000 m, respectively. More preferably, a preset time of 30 seconds to 120 seconds and, even more preferably, a preset time of 45 seconds to 90 seconds may be set. More preferably, a preset distance of 100 m to 2500 m and, even more preferably, a preset distance of 250 m to 750 m may be set. To this end, the processor 110 may control the speed of the virtual vehicle driving on the route set in the navigation system 123.

However, the time of 1 minute or the distance of 500m is for explaining an embodiment, and may be changed according to settings.

According to an embodiment, the processor 110 may control the speed of the virtual vehicle performing the simulated drive or the speed of the time flow of the virtual environment for the simulated drive differently from the drive of the actual vehicle, through the navigation system 123.

In this case, the processor 110 may display the drive of the actual vehicle through the navigation system 123 or display the drive of the virtual vehicle through the navigation system 123, according to a user input.

When the simulated drive of the virtual vehicle begins, the processor 110 may acquire driving environment information for the vehicle's position at each preset time interval (e.g., 15 minutes) or each preset driving distance (e.g., 1 km).

Referring to the entire simulated drive route map 611 in FIG. 6, it can be seen that when the virtual vehicle drives along the driving route, expected positions for acquiring driving environment information at each preset time interval or each preset driving distance are displayed.

However, the display of the expected positions is for clearly explaining the embodiment of the present disclosure for acquiring driving environment information, and whether to display the expected positions may be changed according to settings.

Here, although the time interval for the processor 110 to acquire the driving environment information is described as 15 minutes and the driving distance as 1 km, this is for explaining an embodiment, and the time interval or driving distance may be changed according to settings.

The processor 110 may acquire driving environment information for the position of the virtual vehicle performing the simulated drive along the driving route of the navigation system 123, through the information acquisition unit 125.

In step 505, the processor 110 may implement a virtual cabin environment for the cabin of the virtual vehicle of the virtual HVAC model, based on the driving environment information and the virtual HVAC model in which the vehicle's HVAC system is configured as a digital twin.

To explain in more detail, the processor 110 may input the driving environment information acquired for the position of the virtual vehicle into the virtual HVAC system 200 of the virtual HVAC model 121, and based on this, may implement the virtual cabin environment for the cabin 11 of the virtual HVAC system 200.

As described above, the virtual HVAC model 121 is in a trained state to predict and implement the virtual cabin environment for the cabin 11 of the virtual HVAC system 200 when driving environment information is inputted, and the processor 110 may implement the virtual cabin environment information for the cabin 11 of the virtual vehicle for the acquired driving environment information, based on the trained virtual HVAC model 121.

To explain in more detail, the virtual HVAC model 121 may predict at least some information on the temperature and humidity for the cabin 11 of the virtual vehicle, based on at least some information on atmospheric temperature, ground temperature, weather, and humidity included in the inputted driving environment information. In this case, when the virtual HVAC system 200 is in operation, the virtual HVAC model 121 may predict and implement the environment for at least some of the temperature, direction, and volume of the air supplied to the cabin 11 of the virtual vehicle.

When the virtual HVAC model 121 acquires new driving environment information after implementing the virtual cabin environment of the cabin 11, the virtual HVAC model 121 may be configured to calculate a change value of the driving environment information and to modify the virtual cabin environment for the cabin 11 by reflecting the change value of the driving environment information.

In this case, when the virtual HVAC system 200 is in operation, the virtual HVAC model 121 may modify the virtual cabin environment for the cabin 11 by reflecting the operation of the virtual HVAC system 200 and the change value of the driving environment information.

In step 507, the processor 110 may control the virtual HVAC system such that the virtual cabin environment reaches the target cabin environment.

For example, the processor 110 may control at least some of the refrigerant temperature, the rotational speed of the blower 250, the temperature of the air flowing into the cabin 11, and the direction of the air flowing into the cabin 11, such that the virtual cabin environment implemented for the cabin 11 of the virtual HVAC system 200 in the virtual HVAC model 121 reaches the target cabin environment.

When the virtual cabin environment for the cabin 11 of the HVAC system changes during the operation of the virtual HVAC system 200, the processor 110 may control the operation of the virtual HVAC system 200 to satisfy the target cabin environment by reflecting the changed virtual cabin environment.

In addition, when the virtual cabin environment implemented in the cabin 11 of the virtual HVAC system 200 through the virtual HVAC model 121 has reached the target cabin environment, the processor 110 may control the operation of the virtual HVAC system 200 to maintain the virtual cabin environment.

To explain in more detail, the processor 110 may detect that the virtual cabin environment of the cabin 11 has changed based on newly acquired driving environment information, or an internal heat source of the virtual vehicle (e.g., a battery), etc.

At this time, the processor 110 may maintain the virtual cabin environment at the target cabin environment by adjusting the refrigerant temperature and controlling the rotational speed of the blower 250.

For example, if the processor 110 confirms that the temperature in the virtual cabin environment is rising, the processor 110 may lower the temperature of the refrigerant or increase the rotational speed of the blower 250 to lower the temperature of the air supplied to the cabin 11 or to increase the flow of air supplied to the cabin 11.

On the other hand, if the processor 110 confirms that the temperature in the virtual cabin environment is falling, the processor 110 may raise the temperature of the refrigerant or decrease the rotational speed of the blower 250 to raise the temperature of the air supplied to the cabin 11 or to decrease the flow of air supplied to the cabin 11.

In addition, the processor 110 may control the virtual HVAC system 200 to ensure efficient circulation of cabin air through control of the temperature and/or direction of the air supplied to the cabin 11.

For example, the processor 110 may control the virtual HVAC system 200 to appropriately adjust the temperature of the air flowing into the cabin 11 and to adjust the air direction to ensure even distribution of air, so that the temperature or humidity of a specific area does not become unbalanced. The processor 110 may acquire and store in the memory 120 log data for the operation of the virtual HVAC system 200, for example, log data for the control of the refrigerant temperature, the rotational speed of the blower 250, the temperature of the air flowing into the cabin 11, and/or the direction of the air flowing into the cabin 11.

In addition, the processor 110 may calculate the power consumption of the virtual HVAC system 200 according to its operation and store it in the memory 120. In this case, the processor 110 may calculate the power consumption for each case when the operating conditions of the virtual HVAC system 200 are changed.

In step 509, the processor 110 may determine an operation for the HVAC system that minimizes the battery consumption of the vehicle, based on log data from the virtual HVAC system related to the control.

The processor 110 may determine the operating conditions of the virtual HVAC system that minimize the battery consumption of the actual vehicle by comparing the stored log data for various situations and the battery's power consumption for the operation of the virtual HVAC system 200.

Here, the operating conditions of the virtual HVAC system may include at least some of the refrigerant temperature, the rotational speed of the blower 250, the temperature of the air flowing into the cabin 11, and the direction of the air flowing into the cabin 11.

Here, the processor 110 may determine the operating conditions of the virtual HVAC system that minimize battery consumption by combining at least some of the various log data in a direction that minimizes battery consumption.

The processor 110 may determine the operation of the HVAC system 140 by applying the operating conditions of the virtual HVAC system that minimize battery consumption to the operation of the HVAC system 140 of the actual vehicle.

The processor 110 may perform the operation of determining the operating conditions of the virtual HVAC system that minimize battery consumption for each piece of acquired driving environment information and applying them to the HVAC system 140 of the actual vehicle.

For example, when the processor 110 acquires driving environment information at a first position of the simulated driving virtual vehicle, it may perform at least some of the steps of FIG. 5 to determine a first operating condition for the HVAC system 140 that satisfies the target temperature while minimizing battery consumption, and may control the HVAC system 140 according to the first operating condition.

Then, by the time the actual vehicle passes the first position, the HVAC system 140 will be operating according to the first operating condition determined for the first position.

Subsequently, when the simulated driving virtual vehicle reaches a second position, which is the next location for acquiring driving environment information from the first position, the processor 110 may acquire driving environment information for the second position, perform at least some of the steps of FIG. 5 to determine a second operating condition for the HVAC system 140 that satisfies the target temperature while minimizing battery consumption, and control the HVAC system 140 according to the second operating condition.

In this case, similarly, by the time the actual vehicle passes the second position, the HVAC system 140 will be operating according to the second operating condition determined for the second position.

According to the description above, the processor 110 may control the operation of the actual HVAC system in a manner that can minimize battery consumption while maintaining the target cabin environment at each point in time when driving environment information is acquired while the actual vehicle is driving, and may efficiently control the battery consumption of the vehicle.

The processor 110 may perform all of the embodiments of FIG. 5, and may terminate the performance of the embodiment of FIG. 5 when the ignition of the actual vehicle is turned off, or when the operation of the HVAC system 140 is turned off.

According to various embodiments, the processor 110 may store in the memory 120 at least some information on: the position of the virtual vehicle; the driving environment information acquired at the vehicle's position; the virtual cabin environment implemented according to the driving environment information; the operating conditions of the virtual HVAC system for the virtual cabin environment to reach or maintain the target cabin environment; and the operating conditions of the virtual HVAC system that minimize battery consumption.

In this case, at least some of the information stored in the memory 120 may be included in a dataset for the artificial intelligence training of the virtual HVAC system 200 as data for improving the performance of the virtual HVAC model 121.

According to the embodiments described above, by providing a database for optimized HVAC system control that minimizes battery consumption during driving, it is possible to effectively control battery consumption when a destination and target cabin environment are set via navigation in an actual vehicle.

According to various embodiments, the method and apparatus can minimize battery consumption while maintaining an optimal state for the vehicle's cabin environment according to a predicted driving environment in which the actual vehicle is expected to operate.

According to various embodiments, the method and apparatus can periodically or in real-time adjust the operation of the HVAC system in response to changes in the vehicle's external environment, thereby reducing battery consumption and improving energy efficiency.

According to various embodiments, the performance of the HVAC system can be verified in advance under various driving conditions. Consequently, optimization of the HVAC system can be achieved, and potential problems that may arise during the design and operation stages of the HVAC system can be predicted and addressed proactively.

According to various embodiments, an optimal control method can be automatically determined by analyzing performance data, such as battery consumption, based on operation log data from the HVAC system.

According to various embodiments, the energy efficiency of the HVAC system can be maximized while simultaneously improving passenger convenience, without requiring separate manipulation by the user.

Although the embodiments have been described with reference to a limited number of drawings, those skilled in the art will be able to apply various technical modifications and variations based on the various embodiments.

For example, appropriate results may be achieved even if the described technologies are performed in a different order from the described method, or if the components of the described system, structure, device, circuit, etc., are combined or joined in a different form from the described method, or are replaced or substituted by other components or equivalents.

Therefore, other implementations, other embodiments, and equivalents to the claims are intended to be included within the scope of the following claims.

## Claims

1. A method for processing an operation of a virtual HVAC model (121) implemented as a digital twin,
wherein the operation is processed by a processor (110),
the method comprising:
setting, based on a user input, a destination in a navigation system (123) of a vehicle and a target cabin environment for an HVAC system (140) of the vehicle;
acquiring, upon initiating a simulated drive of a virtual vehicle based on a driving route to the set destination, driving environment information for a position of the virtual vehicle at each preset time interval or each preset driving distance;
implementing, via the virtual HVAC model (121), a virtual cabin environment of the virtual vehicle, based on the acquired driving environment information;
controlling a virtual HVAC system (200), included in the virtual HVAC model (121), to cause the virtual cabin environment to reach the target cabin environment; and
determining, based on log data from the virtual HVAC system (200) related to the controlling, an operation for the HVAC system (140) of the vehicle that minimizes battery consumption of the vehicle,
wherein the virtual HVAC model (121) is adapted to include a refrigerant that is configured to include at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant.

2. The method according to claim 1,
wherein the natural refrigerant is configured to comprise at least one selected from the group consisting of methane (R-50), ammonia (R-717), carbon dioxide (R-744), ethane (R-170), and propane (R-290), and/or
wherein the hydrofluorocarbon (HFC)-based refrigerant is configured to comprise at least one selected from the group consisting of difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc), and/or
wherein the hydrofluoroolefin (HFO)-based refrigerant is configured to comprise at least one selected from the group consisting of 1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye), and/or
wherein the hydrochlorofluorocarbon (HCFC)-based refrigerant is configured to comprise at least one selected from the group consisting of chlorodifluoromethane (R-22), chlorotetrafluoroethane (R-124), and 1-chloro-1,1-difluoroethane (R-142b), and/or
wherein the hydrocarbon-based refrigerant that is not a natural refrigerant is configured to comprise at least one selected from the group consisting of propylene (R-1270), isobutane (R-600a), dimethyl ether, isopentane, and pentane, and/or
wherein the halon or the perfluorocarbon (PFC)-based refrigerant is configured to comprise at least one selected from the group consisting of trifluoroiodomethane (R-13I1), octafluoropropane (R-218), and octafluorocyclobutane (RC318).

3. The method according claim 1 or 2, wherein the processor (110) is adapted to acquire the user input that sets the target cabin environment for the cabin (11) through the HVAC system (140) of the vehicle,
preferably wherein the processor (110) is adapted to acquire the user input that sets a target temperature and/or humidity through a control panel of the HVAC system (140) located in the cabin (11) of the vehicle.

4. The method according to any one of claims 1 to 3, wherein the acquiring of the driving environment information for the position of the virtual vehicle at each preset time interval or each preset driving distance is performed through a preset server that is configured to include at least one of a server that provides information related to an atmosphere and/or a ground for a specific location or area, preferably a weather station, a weather providing API, and/or a global weather data providing service.

5. The method according to any one of claims 1 to 4, wherein the controlling of the virtual HVAC system (200) is performed based on information or data stored in a memory (120).

6. The method according to claim 5, wherein at least one program for controlling the operation of the virtual HVAC model (121) and/or the navigation system (123) is stored in the memory (120).

7. The method according to any one of claims 1 to 6, wherein the log data for the operation of the virtual HVAC system (200) include at least some information on: a temperature change of the refrigerant; a rotational speed of a blower (250); a temperature and humidity of air flowing into the cabin (11); and a change in air volume and direction,
preferably wherein the log data further include at least one of: environmental data related to weather, atmospheric temperature, humidity, and ground temperature for a specific location of the virtual vehicle on the driving route, acquired during operation of the virtual HVAC system (200).

8. The method according to any one of claims 1 to 7, wherein the virtual HVAC model (121) is trained using artificial intelligence to predict and implement the virtual cabin environment of the virtual vehicle based on the driving environment information.

9. The method according to any one of claims 1 to 8, wherein the step of acquiring the driving environment information further comprises controlling a speed of the virtual vehicle such that a position of the virtual vehicle is ahead of a position of the vehicle by a preset time or a preset distance.

10. An apparatus (100) for processing an operation of a virtual HVAC model (121) implemented as a digital twin, the apparatus (100) comprising:
an HVAC system (140) configured to perform heating control of a cabin (11) of a vehicle;
a refrigerant adapted to circulate through the HVAC system (140); and
a virtual HVAC model (121) configured to operate as a digital twin of the HVAC system (140),
wherein the refrigerant comprises at least one selected from the group consisting of:
a natural refrigerant;
a hydrofluorocarbon (HFC)-based refrigerant;
a hydrofluoroolefin (HFO)-based refrigerant;
a hydrochlorofluorocarbon (HCFC)-based refrigerant;
a hydrocarbon-based refrigerant that is not a natural refrigerant; and
a halon or a perfluorocarbon (PFC)-based refrigerant.

11. The apparatus (100) according to claim 10, wherein the natural refrigerant comprises at least one selected from the group consisting of:
methane (R-50), ammonia (R-717), carbon dioxide (R-744), ethane (R-170), and propane (R-290),
wherein the hydrofluorocarbon (HFC)-based refrigerant comprises at least one selected from the group consisting of:
difluoromethane (R-32), 1,1-difluoroethane (R-152a), pentafluoroethane (R-125), 1,1,1,2-tetrafluoroethane (R-134a), 1,1,1-trifluoroethane (R-143a), trifluoromethane (R-23), fluoroethane (R-161), 1,1,1,2,3,3,3-heptafluoropropane (R-227ea), 1,1,1,2,3,3-hexafluoropropane (R-236ea), 1,1,1,3,3,3-hexafluoropropane (R-236fa), 1,1,1,3,3-pentafluoropropane (R-245fa), and 1,1,1,3,3-pentafluorobutane (R-365mfc),
wherein the hydrofluoroolefin (HFO)-based refrigerant comprises at least one selected from the group consisting of:
1,1,2-trifluoroethylene (R-1123), 1-chloro-2,3,3,3-tetrafluoropropene (R1224yd(Z)), 2,3,3,3-tetrafluoropropene (R-1234yf), 1,3,3,3-tetrafluoropropene (R-1234ze), 1,2,3,3-tetrafluoropropene (R-1234ye), 3,3,3-trifluoropropene (R-1243zf), 1,1-difluoroethylene (R-1132a), and 1,2,3,3,3-pentafluoropropene (R-1225ye),
wherein the hydrochlorofluorocarbon (HCFC)-based refrigerant comprises at least one selected from the group consisting of:
chlorodifluoromethane (R-22), chlorotetrafluoroethane (R-124), and 1-chloro-1,1-difluoroethane (R-142b),
wherein the hydrocarbon-based refrigerant that is not a natural refrigerant comprises at least one selected from the group consisting of:
propylene (R-1270), isobutane (R-600a), dimethyl ether, isopentane, and pentane, and
wherein the halon or the perfluorocarbon (PFC)-based refrigerant comprises at least one selected from the group consisting of:
trifluoroiodomethane (R-13I1), octafluoropropane (R-218), and octafluorocyclobutane (RC318).

12. The apparatus (100) according to claim 10 or 11, further comprising:
a navigation system (123) configured to guide a drive of the vehicle or a virtual vehicle implemented in the virtual HVAC model (121); and
a processor (110) configured to:
set, based on a user input, a destination in the navigation system (123) and a target cabin environment for an HVAC system (140) of the vehicle;
acquire, upon initiating a simulated drive of the virtual vehicle based on a driving route to the set destination, driving environment information for a position of the virtual vehicle at each preset time interval or each preset driving distance;
implement, via the virtual HVAC model (121), a virtual cabin environment of the virtual vehicle, based on the acquired driving environment information;
control a virtual HVAC system (200), included in the virtual HVAC model (121), to cause the virtual cabin environment to reach the target cabin environment; and
determine, based on log data from the virtual HVAC system (200) related to the controlling, an operation for the HVAC system (140) of the vehicle that minimizes battery consumption of the vehicle.

13. The apparatus (100) according to claim 12, wherein the virtual HVAC model (121) is trainable based on artificial intelligence to predict and implement the virtual cabin environment for the cabin of the virtual HVAC system (121), based on the driving environment information.

14. The apparatus (100) according to claim 12 or 13, wherein the processor (110) is further configured to control a speed of the virtual vehicle such that a position of the virtual vehicle is ahead of a position of the vehicle by a preset time or a preset distance.

15. Use of a virtual HVAC model (121) implemented as a digital twin for minimizing battery consumption of a vehicle.
